# FASCICULE DE BREVET EUROPEEN

(11) **EP 1 485 189 B1**
(45) Date de publication et mention de la délivrance du brevet: **11.04.2007**
(21) Numéro de dépôt: 03739517.5
(22) Date de dépôt: 07.02.2003
(51) Int. Cl.: B01D 53/047

(54) **PROCEDE ET INSTALLATION D'ENRICHISSEMENT D'UN MELANGE GAZEUX COMBUSTIBLE EN AU MOINS UN DE SES COMPOSANTS**
VERFAHREN UND ANLAGE ZUR ANREICHERUNG MINDESTENS EINER KOMPONENTE EINES BRENNBAREN GASGEMISCHES
METHOD AND PLANT FOR ENRICHING A COMBUSTIBLE GAS MIXTURE IN AT LEAST ONE COMPONENT THEREOF

(30) Priorité: 15.02.2002 FR 0201920
(43) Date de publication de la demande: 15.12.2004
(73) Titulaire: L'air liquide, Société anonyme à Directoire et Conseil de Surveillance pour l'Etude et l'Exploitation des Procédés G. Claude, 75321 Paris Cedex 07 (FR)
(72) Inventeur: DE SOUZA, Guillaume, F-92130 Issy les Moulineaux (FR); TROMEUR, Pascal, F-45520 Cercottes (FR)
(74) Mandataire: Ducreux, Marie
(86) Numéro de dépôt international: PCT/FR2003/000401
(87) Numéro de publication internationale: WO 2003/068365

(56) Documents cités:
- GB-A- 2 337 212
- US-A- 3 029 829
- US-A- 5 137 547

## Description

La présente invention concerne un procédé d'enrichissement en au moins un premier de ses composants d'un mélange gazeux combustible comportant au moins un deuxième composant actif et circulant dans une ligne de gaz à une première pression.

De telles lignes de gaz combustible existent dans de nombreuses installations chimiques ou pétrochimiques où elles servent à alimenter des brûleurs et autres postes de chauffe.

On connaît des procédés d'enrichissement du mélange gazeux combustible par des composants combustibles disponibles comme gaz auxiliaire en sortie d'unités de production de gaz actif, le gaz auxiliaire venant s'ajouter au mélange gazeux circulant dans la ligne. US-A-5,137,547 décrit un tel procédé.

La présente invention a pour objet un procédé d'enrichissement du mélange gazeux combustible circulant dans la ligne par extraction d'un second de ses composants et réinjection du premier composant dans la ligne.

Pour ce faire selon l'invention, le procédé comprend les étapes suivantes :
- dériver un flux partiel de la ligne de gaz,
- comprimer ce flux dérivé à une deuxième pression supérieure à la première pression,
- traiter le flux dérivé comprimé dans une unité de séparation de gaz alimentée en mélange gazeux à séparer à une pression supérieure à la première pression, avantageusement voisine de la deuxième pression, et fournissant en une première sortie un mélange riche en ledit deuxième composant actif, et
- réinjecter dans la ligne, depuis une deuxième sortie de l'unité de séparation, le flux traité sensiblement à la première pression.

La présente invention a également pour objet une installation pour la mise en oeuvre de ce procédé, comprenant :
- une ligne de mélange gazeux combustible,
- une unité de séparation de gaz ayant une entrée de mélange gazeux à séparer, une sortie de gaz de production, une sortie intermédiaire, une entrée intermédiaire reliée à la sortie d'un compresseur dont l'entrée est reliée à un point de dérivation amont de la ligne et à la sortie intermédiaire de l'unité, et une sortie annexe reliée à un point aval de la ligne.

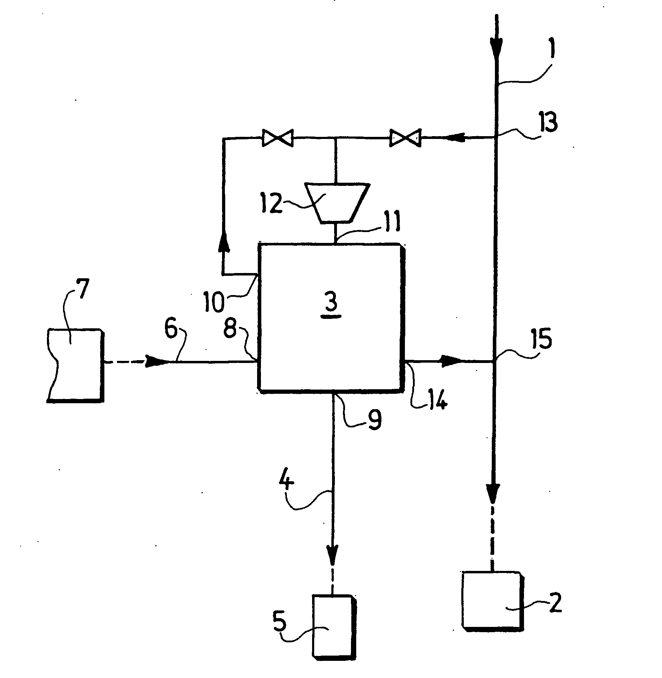

D'autres caractéristiques et avantages de l'invention ressortiront de la description suivante d'un mode de réalisation, donnée à titre illustratif mais nullement limitatif, faite en relation avec le dessin annexé sur lequel:
- La figure unique représente schématiquement une installation pour la mise en oeuvre du procédé selon l'invention.

Sur la figure unique on a représenté une ligne 1 de distribution d'un mélange gazeux combustible généralement dénommé « fuel gaz » alimentant divers postes utilisateurs tels que des ensembles de brûleurs 2 pour la chauffe d'éléments actifs ou passifs d'un site industriel.

Dans l'application ici envisagée, ce site industriel comprend une unité 3, typiquement du type à adsorption « PSA », fournissant un gaz de production épuré 4, typiquement de l'hydrogène, à des postes utilisateurs 5 du site, à partir d'un mélange gazeux de synthèse 6, typiquement produit par une unité de réformage catalytique 7. L'unité 3 comporte donc une entrée principale 8 recevant le gaz 6 à une haute pression et une sortie 9 produisant le gaz de production 4 sensiblement à cette haute pression. L'unité 3 comporte en outre au moins une sortie intermédiaire 10 d'où un gaz de recyclage, à une pression inférieure à la pression haute, est renvoyé vers une entrée intermédiaire 11 de l'unité 3.

Selon un aspect de l'invention, l'entrée intermédiaire 11 est reliée à la sortie d'un compresseur 12 dont l'entrée est sélectivement reliée à la sortie intermédiaire 10 et à un point de dérivation amont 13 de la ligne 1. Corrélativement, l'unité 3 comporte une sortie annexe 14 reliée à un point d'injection aval 15 de la ligne 1. Plus spécifiquement, l'unité 3 comporte au moins trois, typiquement au moins quatre adsorbeurs dont les entrées sont sélectivement connectables à l'entrée 8 de gaz à séparer et à l'entrée intermédiaire 11 et dont les sorties sont sélectivement connectables à la sortie 9 de gaz de production et à la sortie intermédiaire 10.

Ainsi, selon le procédé de l'invention, une partie dérivée du flux de gaz combustible dans la ligne 1 est traitée, en étant comprimée dans le compresseur 12, dans l'unité 3 comme un gaz de purge recyclé de cette unité 3, concourrant ainsi à extraire de l'hydrogène de ce flux dérivé pour augmenter la production d'hydrogène, et retourner, via la sortie auxiliaire 14, le flux dérivé traité constitué en conséquence quasi essentiellement d'hydrocarbures, pour réinjecter ces derniers dans la ligne 1 et augmenter ainsi le pouvoir calorifique du gaz envoyé aux brûleurs 2.

Typiquement la pression dans la ligne 1 est de l'ordre de 6 bars alors que la pression du gaz d'alimentation 6 à l'entrée 8 de l'unité 3 est de l'ordre de 25 bars, le compresseur 12 ayant un taux de compression d'environ 5.

Quoique l'invention ait été décrite en relation avec un mode de réalisation particulier, elle ne s'en trouve pas limitée mais est susceptible de modifications et de variantes qui apparaîtront à l'homme de métier dans le cadre des revendications ci-après.

## Revendications

1. Procédé d'enrichissement en au moins un de ses composants d'un mélange gazeux combustible comportant au moins un deuxième composant actif et circulant dans une ligne de gaz (1) à une première pression, **caractérisé en ce qu'**il comprend les étapes suivantes :
- dériver (13) un flux partiel de la ligne (1),
- comprimer (12) ce flux dérivé à une deuxième pression supérieure à la première pression,
- traiter le flux dérivé comprimé dans une unité de séparation de gaz (3) alimentée en mélange gazeux à séparer (6) à une pression supérieure à la première pression et fournissant en une première sortie (9) un mélange riche en ledit deuxième composant actif, et
- réinjecter (15) dans la ligne (1), depuis une deuxième sortie (14) de l'unité (3), le flux traité sensiblement à la première pression

2. Procédé selon la revendication 1, **caractérisé en ce que** le deuxième composant actif est l'hydrogène.

3. Procédé selon l'une des revendications précédentes, **caractérisé en ce que** le mélange gazeux à séparer (6) est un gaz de réformage.

4. Procédé selon l'une des revendications précédentes, **caractérisé en ce que** l'unité de séparation de gaz (3) est du type à adsorption.

5. Installation pour la mise en oeuvre du procédé selon l'une des revendications précédentes, comprenant :
- une ligne (1) de mélange gazeux combustible,
- une unité de séparation de gaz (3) ayant une entrée (8) de mélange gazeux à séparer (6), une sortie (9) de gaz de production (4), une sortie intermédiaire (10), une entrée intermédiaire (11) reliée à la sortie d'un compresseur (12) dont l'entrée est reliée à un point de dérivation amont (13) de la ligne (1) et à la sortie intermédiaire (10) de l'unité, et une sortie annexe (14) reliée à un point aval (15) de la ligne (1).

6. Installation selon la revendication 5, **caractérisée en ce que** l'unité de séparation (3) comprend au moins trois adsorbeurs dont les entrées sont sélectivement connectables à l'entrée (8) de mélange gazeux à séparer (6) et à l'entrée intermédiaire (11) et les sorties sont sélectivement connectables à la sortie (9) de gaz de production (4) et à la sortie intermédiaire (10).

## Claims

1. Method for enriching, in at least one of its components, a combustible gas mixture comprising at least a second active component and flowing in a gas line (1) at a first pressure, **characterized in that** it comprises the following steps:
- bypassing (13) a partial stream from the line (1),
- compressing (12) this bypass stream to a second pressure above the first pressure,
- treating the compressed bypass stream in a gas separation unit (3) supplied with gas mixture to be separated (6) at a pressure above the first pressure and supplying at a first outlet (9) a mixture rich in said second active component, and
- reinjecting (15) the treated stream into the line (1), from a second outlet (14) of the unit (3), substantially at the first pressure.

2. Method according to Claim 1, **characterized in that** the second active component is hydrogen.

3. Method according to either of the preceding claims, **characterized in that** the gas mixture to be separated (6) is a reforming gas.

4. Method according to one of the preceding claims, **characterized in that** the gas separation unit (3) is of the adsorption type.

5. Installation for putting into practice the method according to one of the preceding claims, comprising:
- a line (1) of combustible gas mixture,
- a gas separation unit (3) with an inlet (8) for gas mixture to be separated (6), an outlet (9) for production gas (4), an intermediate outlet (10), an intermediate inlet (11) connected to the outlet of a compressor (12) of which the inlet is connected to an upstream bypass point (13) of the line (1) and to the intermediate outlet (10) of the unit, and an ancillary outlet (14) connected to a downstream point (15) of the line (1).

6. Installation according to Claim 5, **characterized in that** the separation unit (3) comprises at least three adsorbers of which the inlets are selectively connectable to the inlet (8) of gas mixture to be separated (6) and to the intermediate inlet (11) and the outlets are selectively connectable to the outlet (9) of production gas (4) and to the intermediate outlet (10).

## Patentansprüche

1. Verfahren zum Anreichern mindestens eines Bestandteils einer Verbrennungsgasmischung, die mindestens einen zweiten aktiven Bestandteil enthält und in einer Gasleitung (1) bei einem ersten Druck zirkuliert, **dadurch gekennzeichnet, dass** das Verfahren die folgenden Schritte umfasst:
- Ableiten (13) eines Teilstroms von der Leitung (1),
- Komprimieren (12) dieses abgeleiteten Stroms bei einem zweiten Druck, der höher als der erste Druck ist,
- Behandeln dieses abgeleiteten komprimierten Stroms in einer Gastrenneinheit (3), die von einer zu trennenden Gasmischung (6) bei einem Druck gespeist wird, der höher als der erste Druck ist, und die an einem ersten Auslass (9) eine Mischung bereitstellt, die reich an dem zweiten aktiven Bestandteil ist und
- Wiedereinspritzen (15) des behandelten Stroms von einem zweiten Auslass (14) der Einheit (3) in die Leitung (1) im wesentlichen bei dem ersten Druck.

2. Verfahren nach Anspruch 1, **dadurch gekennzeichnet, dass** es sich bei dem zweiten aktiven Bestandteil um Wasserstoff handelt.

3. Verfahren nach einem der vorhergehenden Ansprüche, **dadurch gekennzeichnet, dass** es sich bei der zu trennenden Gasmischung (6) um ein Reformierungsgas handelt.

4. Verfahren nach einem der vorhergehenden Ansprüche, **dadurch gekennzeichnet, dass** die Gastrennungseinheit (3) vom Adsorptionstyp ist.

5. Einrichtung zur Umsetzung des Verfahrens nach einem der vorhergehenden Ansprüche, umfassend:
- eine Leitung (1) für Verbrennungsgasmischung,
- eine Gastrennungseinheit (3) mit einem Einlass (8) für zu trennende Gasmischung (6), einem Auslass (9) für Herstellungsgas (4), einen Zwischenauslass (10), einem Zwischeneinlass (11), der mit dem Auslass eines Kompressors (12) verbunden ist, dessen Einlass mit einem stromaufwärtigen Ableitungspunkt (13) der Leitung (1) und dem Zwischenauslass (10) der Einheit und einem Nebenauslass (14) verbunden ist, der mit einem stromabwärtigen Punkt (15) der Leitung (1) verbunden ist.

6. Einrichtung nach Anspruch 5, **dadurch gekennzeichnet, dass** die Trenneinheit (3) mindestens drei Adsorber umfasst, deren Einlässe selektiv mit dem Einlass (8) der zu trennenden Gasmischung (6) und dem Zwischeneinlass (11) verbunden werden können, und die Auslässe selektiv mit dem Auslass (9) des Herstellungsgases (4) und dem Zwischenauslass (10) verbunden werden können.
